# EUROPEAN PATENT SPECIFICATION

(11) **EP 0 928 837 B1**
(45) Date of publication and mention of the grant of the patent: **05.09.2007**
(21) Application number: 99300144.5
(22) Date of filing: 08.01.1999
(51) Int. Cl.: C25D 11/16, A47J 36/02, C25D 11/18

(54) **An article of cookware and method of forming the same**
Kochgeschirr und Verfahren zur Herstellung
Ustensile de cuisson et procédé de fabrication

(30) Priority: 09.01.1998 GB 9800515
(43) Date of publication of application: 14.07.1999
(73) Proprietor: MEYER MANUFACTURING CO., LTD, Hong Kong (HK)
(72) Inventor: Cheng, Stanley Kin-Sui, Kwun Tong, Kowloon (HK)
(74) Representative: Findlay, Alice Rosemary

(56) References cited:
- EP-A- 0 424 072
- DE-A- 1 421 982
- DE-B- 1 184 585
- GB-A- 1 099 486

## Description

The present invention relates to an article of cookware having a hard-anodized surface, and to a method of forming the same.

Traditional non-stick cookware in particular is often made of aluminium alloy which is soft, porous and stains easily if not covered with the combination of a non-stick coating on the cooking surface and a porcelain enamel or silicon-polyester paint on the exterior. Besides providing a decorative appearance and non-stick convenience, these coverings prevent the food from interacting with the aluminium surface, which can change the taste and colour of food. Since the non-stick interior is soft and will wear out, the pan has a limited life.

In the case of the aluminium cookware, since aluminium is such a nnft material it is known to subject the surface of such an article to an anodizing or hard-anodizing process. In such a process, the aluminium surface functions as an anode in an electrolytic bath so that the surface becomes exposed to and reacts with the very active oxygen which is released at the anode. Hard-anodizing requires the bath temperature to be lowered. Such an anodizing or hard-anodizing process results in a much harder surface which is less susceptible to scratching or to other damage. The applicant's EP 0424072A describes a technique for hard-anodizing.

Although the hard-anodizing technique greatly hardens the surface such that it becomes almost twice as hard as stainless steel, and this prevents interaction of the aluminium with foods, a problem is that the hard-anodized surface is very coarse and hard, such that it can easily abrade other surfaces such as worktops, stovetops, shelves, kitchen utensils etc which it comes into contact with and the surface quickly appears marked or marred. In addition, foods can penetrate into the hard porous surface easily staining it.

The present invention seeks to overcome these drawbacks.

According to a first aspect of the present invention there is provided a method of surface treatment of an article of cookware having an aluminium surface comprising subjecting the aluminium surface to a polishing technique followed by hard-anodizing, and followed by a further polishing technique.

The polishing prior to hard-anodizing may require at least first and second polishing steps using progressively finer polishing cloths.

In one embodiment, the polishing prior to hard-anodizing requires at the exterior side wall of the article an initial polishing using an abrasive cloth of grit about 280-320. The article is subsequently polished with a finer sisal cotton buff, followed by a polish with a cotton buff.

The polishing subsequent to hard-anodizing is preferably performed in a single polishing step employing a fine cotton buff.

The process results in an article of cookware which has a very hard surface, and yet one in which the surface is very dense and smooth and does not suffer from the problems of associated with conventional hard-anodized cookware.

In a further aspect the invention resides in an article of cookware having a surface treated according to the aforementioned process.

According to a further aspect, the invention resides in an article of cookware having at least an outer surface comprising aluminium which has been subjected to polishing followed by hard-anodizing followed by a further polishing step.

Embodiments of the present invention are now described, by way of example only, with reference to the following detailed description.

An article of aluminium cookware is generally formed from a flat blank of metal which is stamped into the desired shape in a screw press or similar in which the side wall of the article is drawn through a die upwardly relative to the base. As well as cookware of aluminium (which is taken to include aluminium alloys) the invention is also applicable to steel clad aluminium where the steel forms the interior, and the aluminium is the exterior.

In a conventional hard-anodizing process the article would subsequently be subjected to a surface roughening by some grit-blasting procedure and/or etching process by chemical or electrochemical means. This removes any surface imperfections. According to the invention however, instead of surface roughening, the surface is first subjected to a polishing technique.

In particular, in the case of an exterior surface this is subjected to a series of polishing steps employing highspeed polishing wheels employing progressively finer cloths. A polishing agent is also employed. It is important that an agent is utilised which is not too caustic such that it eats into the hard-anodized layer, and is not too mild otherwise insufficient polishing effect is obtained. One suitable material is sold by Robitor & Philadelphia srl under Number 3519 type AP/31C. The polishing sequence is as follows:
Side wall
   1. An abrasive cloth grit 280-320, 20-25 seconds.
   2. Sisal+ buff, 50-60 seconds.
   3. Cotton buff, 25-30 seconds.
Bottom
   1. Sisal cotton buff 25-30 seconds.
   2. Cotton buff, 25-30 seconds.

In the case of the side wall, the exterior surface is often of relatively poor surface quality since this is the region which has undergone the greatest deformation. This therefore benefits from use of an initial more abrasive cloth. The polishing is able to remove surface imperfections prior to hard-anodizing.

In the case of the pan interior the sequence is:
Side wall
   1. Sisal+ cotton buff, for about 100 seconds.
   2. Cotton buff, for 25-30 seconds.
Bottom
   1. Sisal+ cotton buff, for 50-60 seconds.
   2. Cotton bath, for 25-30 seconds.

The polishing times indicated are to be considered generally as minimum times to give an acceptable finish-The resultant surface is of considerably greater density and smoothness as compared to the roughened surface of the conventional technique.

The pan is subsequently subjected to the hard-anodizing process, typically requiring 20-200 minutes in an acid bath at below about 5°C. This has the effect that the aluminium reacts with oxygen creating a hard surface layer, which may be up to 30-40 microns deep.

Subsequent to hard-anodizing, the pan is then subjected to a further polishing step using a cotton buff wheel for at least about 25-30 seconds. A polishing agent such as Number 3533 type LUX ROSA of Robitor & Philadelphia srl is used. This polishing step is applied to at least both the exterior side wall and bottom surface, although in the case of an article having a steel interior the further polishing can be omitted from the steel interior. Although the polishing results in some reduction in thickness of the hard-anodized layer this reduction is small, generally below 5%. This final step produces a final surface brightening.

The final resultant surface has greatly increased density as compared to that resulting from a conventional hard-anodized process having a much less porous and more closed surface structure. This gives the product an elegant marble-like finish. Typically a surface roughness of the order of 0.1 to 0.2 microns (roughness arithmetic Ra) is achieved. The smooth surface means that the surface cannot easily abrade other surfaces, whilst food cannot easily stick thereto, greatly reducing staining.

## Claims

1. A method of surface treatment of an article of cookware having an aluminium surface comprising subjecting the aluminium surface to a polishing technique followed by hard-anodizing, and followed by a further polishing technique.

2. A method according to claim 1 wherein the polishing prior to hard-anodizing includes at least first and second polishing steps using progressively finer polishing cloths.

3. A method according to claim 1 or 2 wherein the polishing prior to hard-anodizing comprises, at the exterior side wall of the article, an initial polishing using an abrasive cloth of grit in the range 280-320.

4. A method according to claim 3 wherein the article is subsequently polished with a finer sisal cotton buff, followed by a polish with a cotton buff.

5. A method according to any one of claims 1 to 4 wherein the polishing subsequent to hard-anodizing is preferably performed in a single polishing step employing a fine cotton buff.

6. An article of cookware having a surface treated according to the method of any preceding claim.

7. An article of cookware having at least an outer surface comprising aluminium which has been subjected to polishing followed by hard-anodizing, and followed by a further polishing step.

## Patentansprüche

1. Verfahren zur Oberflächenbehandlung eines Kochgeschirrartikels mit einer Aluminiumoberfläche, das das Unterziehen der Aluminiumoberfläche einer Poliertechnik aufweist, dem sich eine Harteloxierung anschließt, und der sich eine weitere Poliertechnik anschließt.

2. Verfahren nach Anspruch 1, wobei das Polieren vor der Harteloxierung mindestens erste und zweite Polierschritte unter Verwendung von stufenweise feineren Poliertüchern aufweist.

3. Verfahren nach Anspruch 1 oder 2, wobei das Polieren vor der Harteloxierung ein anfängliches Polieren auf der äußeren Seitenwand des Artikels unter Verwendung eines Schleifleinens mit einer Körnung im Bereich von 280-320 aufweist.

4. Verfahren nach Anspruch 3, wobei der Artikel anschließend mit einer feineren Sisalbaumwollpolierscheibe poliert wird, dem sich eine Politur mit einer Baumwollpolierscheibe anschließt.

5. Verfahren nach einem der Ansprüche 1 bis 4, wobei das Polieren im Anschluß an die Harteloxierung vorzugsweise in einem einzigen Polierschritt durchgeführt wird, der eine feine Baumwollpolierscheibe einsetzt.

6. Kochgeschirrartikel mit einer Oberfläche, die gemäß des Verfahrens nach einem der vorhergehenden Ansprüche behandelt ist.

7. Kochgeschirrartikel mit mindestens einer Außenfläche, die Aluminium aufweist, das einem Polieren unterzogen worden ist, dem sich eine Harteloxierung anschließt, und der sich ein weiterer Polierschritt anschließt.

## Revendications

1. Procédé de traitement de surface d'un article de batterie de cuisine ayant une surface en aluminium, comprenant la soumission de la surface d'aluminium à une technique de polissage suivie d'une anodisation dure, puis d'une autre technique de polissage.

2. Procédé selon la revendication 1, dans lequel le polissage avant l'anodisation dure comprend au moins une première et une seconde étapes de polissage en utilisant des toiles de polissage de plus en plus fines.

3. Procédé selon la revendication 1 ou 2, dans lequel le polissage avant l'anodisation dure comprend, sur la paroi latérale extérieure de l'article, un polissage initial en utilisant une toile abrasive d'un numéro de grosseur dans la plage de 280 à 320.

4. Procédé selon la revendication 3, dans lequel l'article est ensuite poli avec un polissoir de coton sisal plus fin, puis poli avec un polissoir de coton.

5. Procédé selon l'une quelconque des revendications 1 à 4, dans lequel le polissage à la suite de l'anodisation dure est de préférence effectué en une seule étape de polissage à l'aide d'un polissoir de coton fin.

6. Article de batterie de cuisine ayant une surface traitée selon le procédé de l'une quelconque des revendications précédentes.

7. Article de batterie de cuisine ayant au moins une surface externe comprenant de l'aluminium, qui a été soumis à un polissage suivi d'une anodisation dure, puis à une autre étape de polissage.
